# EUROPEAN PATENT APPLICATION

(11) **EP 3 059 734 A1**
(43) Date of publication of application: **24.08.2016**
(21) Application number: 15305235.2
(22) Date of filing: 17.02.2015
(51) Int. Cl.: G11B 27/00, G06F 17/30

(54) **Encoder/decoder**

(71) Applicant: ALCATEL LUCENT, 92100 Boulogne-Billancourt (FR)
(72) Inventor: Tytgat, Donny, 2018 Antwerpen (BE); Lievens, Sammy, 2018 Antwerpen (BE)
(74) Representative: Philippaerts, Yannick

(57) **Abstract**

Video encoder comprising a story database wherein objects forming part of a story of the video are stored, and wherein for each of the stored objects multiple object details are provided, the video encoder further comprising an audio-visual database comprising audio-visual information for each one of the multiple object details provided in the story database, and wherein an importance value is assigned to each one of the multiple object details.

## Description

### Technical Field

The present invention relates to a video encoder, a video decoder, and a video system with an encoder and a decoder to enable flexible video usage. The present invention influences a video system at the video capturing stage, at the video transmission stage, and at the video display stage.

### Background

Video nowadays is a relatively immutable stream of pixels of which its flexibility is largely limited to changing the coding parameters. These parameters merely control the reproduction fidelity of the source pixels. This is rooted in the way video is represented and transformed for transmission to the end-user. The employed workflow is, in essence, the same that has been used since the beginning of video transmission and delivery. That is, something is filmed (and optionally post-processed), coded, transmitted, decoded with the goal of accurately reconstructing source pixels and then shown to the end-user.

While this is fine for traditional media generation and consumption, the current trends indicate a need for more flexibility and adaptability when dealing with video feeds, and their associated applications.

It is an object of the present invention to provide a video encoder that allows a more flexible and adaptable video feed.

### Summary

To this end, the invention provides a video encoder comprises a story database wherein objects forming part of a story of the video are stored, and wherein for each of the stored objects multiple object details are provided, the video encoder further comprising an audiovisual database comprising audiovisual information for each one of the multiple object details provided in the story database, and wherein an importance value is assigned to each one of the multiple object details.

The present invention is based on the insight that a video to be displayed to a user aims to tell the user a story via the audiovisual information that forms the video. This story always comprises a number of objects, which can be foreground objects and/or background objects and which can be static objects and/or dynamic objects, shown in the video, interacting with each other, thereby bringing the story to the user via audiovisual information. In such story, some objects may be of higher importance than other objects and some visual details in an object may be of higher importance than other visual details in that object. In current video encoding and video transmitting schemes, there is no possibility to drop less important objects and/or object details, nor is it possible to emphasize highly important objects and/or object details.

In the present invention, a separation is made between on the one hand the story with the objects wherein each object has multiple object details, and on the other hand the audiovisual information that implements these objects and object details. Therefore, according to the invention, two databases are created, a story database comprising the story with the objects and the multiple object details, and an audiovisual database comprising audiovisual information for each element in the story database. This separation significantly increases video flexibility and adaptability since the separation between the story and the audiovisual information allows a user to for example only use the audiovisual information relating to important objects and/or object details. Such selection is technically made possible by having two databases and assigning an importance value to each one of the multiple object details. These importance values can be calculated in multiple different manners. In the end, these importance values allow to set a threshold, and thereby separate more important from less important details. Based on this selection, the audiovisual database can be accessed to retrieve audiovisual information relating to the selected object details. In this manner, a highly flexible and highly adaptable video feed can be created wherein the video feed can be optimized based on display properties, user preferences, network constraints, and decoder constraints.

Preferably, the multiple object details comprise a substantially hierarchical list of object details converging from generic object information to specific object information. By providing the object details in a hierarchical manner, it is more convenient to select the more important details. Thereby, the audiovisual database is preferably provided in a corresponding hierarchical order and in such a manner that generic audiovisual object information is usable as audiovisual output and is combinable with specific audiovisual object information to arrive at audiovisual output reflecting the specific object information. Examples of such hierarchical audiovisual information are given in the details description. By providing the audiovisual information in a hierarchical order, audiovisual details can be added to a more general audiovisual representation to obtain a detailed audiovisual output of the object.

Preferably, the multiple object details comprise one or more hierarchical lists of object interactions converging from generic interaction information to specific interaction information and wherein the lists are reflected by the respective importance value. Thereby, not only details of the object itself, but also object interactions are listed. Thereby, object interactions are considered to be a specific form of object details. Thus, object interactions, form part of the multiple object details. The object details described above preferably relate to audiovisual information and details describing the object itself, whereas the interaction details relate to interaction of the objects with each other. Thereby, the audiovisual database preferably comprises hierarchical audiovisual information corresponding to the one or more hierarchical lists of object interactions, wherein generic audiovisual interaction information is usable as such as audiovisual output and is combinable with specific audiovisual interaction information relating to specific interaction information to arrive at audiovisual output representing the specific interaction information.

Preferably, the objects are stored by storing semantic information relating to the multiple object details of the objects in a database. Semantic information requires significantly less memory space than the corresponding audiovisual information. Thereby, the semantic information can be created according to a predetermined set of rules, or can be created in a predetermined language, for example a computer language optimized for storytelling. The semantic information comprises the complete story meaning, comprises all objects and all of the object details. Since the semantic information requires only limited memory resources, it can be easily transmitted to a receiver over a network, even if limited bandwidth is available. Based on the received semantic information, the receiver, for example a decoder, can select the objects and/or object details it want to output to a user. The relevant audiovisual information can then be selectively transmitted from the audiovisual database to the receiver.

The present invention further relates to a video decoder adapted to communicate with a video encoder of the invention, wherein the video decoder comprises a communication module adapted to receive a story comprising objects with multiple object details from the video encoder, and wherein the video decoder comprises a selector adapted to make a selection of the multiple object details, wherein the communication module is further adapted to request and receive audiovisual information from the video encoder representing the selection, wherein the video decoder further comprises an audio-video generator to generate an audiovisual output based on the received audiovisual information. The decoder of the invention is adapted to make optimal use of the two databases created at the encoder of the invention. One database comprises story information, preferably in a semantic form, based on which decoder can make a selection of objects and object details it wants to show to a user. This selection can be made based on user preferences, decoder constraints, network constraints and display properties. For example in a situation where the user is requesting video via a mobile device with a limited display resolution, a user might want to focus on the important objects in the story, and only show the main object details, thereby neglecting less important objects and more specific object details. In this manner, the important aspects of the story can be visualized to the user, thereby optimally adapting the video to the current user situation.

Preferably, the selector comprising a user preferences databased and wherein the selector is adapted to make a selection based on the user preferences database. In a user preference database, preferences of the user can be stored. For example a user who is highly interested in cars and watches, this information being known to the decoder allows to select objects and object details, so that at least car related and/or watch related object details are assigned a higher importance value so that these details are shown to the user. Other examples are described in the detailed description.

Preferably, the selector is adapted to make a selection based on at least one of video decoder constraints, display constraints and communication constraints. This allows a decoder to optimize decoder processing and memory use to optimize use of the display and to optimize network use.

The invention further relates to a video system comprising a video encoder of the invention and a video decoder of the invention.

### Brief description of the figures

Some embodiments of apparatus and/or methods in accordance with embodiments of the present invention are now described, by way of example only, and with reference to the accompanying drawings, in which:
figure 1 illustrates an encoding and decoding video system according to an embodiment of the invention;
figure 2 illustrates an hierarchical list usable in an embodiment of a video encoder according to the invention; and
figure 3 illustrates the effect of the importance values in an embodiment of a video encoding and decoding system of the invention.

### Detailed description of embodiments

In the description, the term video is often used, whereby the skilled person will understand that preferably audio forms an integral part of the video so that the term 'video' is held to comprise both audio and video information. The audio and visual information are typically synchronized.

One of the problems that prevents more flexible video solutions to become available in a conventional pixel based video setting is the strong link between the semantics of the video (the "story"), and the visual representation thereof. In traditional solutions, these 2 concepts are intertwined. Semantics are implicitly present in traditional video, however these need interpretation by the viewer in order to be exploited. Think of eye gaze measurements for instance to determine what is important in a certain video stream. The reactive nature of this process greatly reduces the possible application scenarios. Furthermore, due to the visual representation being intertwined with the semantics, one cannot simply change one and expect the other to stay in sync.

An embodiment of the present invention proposes to decouple the concepts of semantics and visual representation in order to optimally create, transmit and visualize video streams.

Any video system comprises three main components, namely the capture process, the transmission process (incl. coding) and the visualization process. The present invention impacts all of these components.

Video capture traditionally uses a camera which captures a real-world scene as faithfully as possible. In order to tell a story, one thus has to enact this story in order to show it to others who are not at the capture location. This is acceptable for high budget scenarios and for select others who have the talent to convincingly act, direct and record the story they wish to convey. For the more average person however, it is difficult to transform a story they have in their minds into a visual medium such as video.

An alternative approach that is primarily used in animation studios is to tell the story by means of animating characters, be it in 2D or in 3D and locating them in a virtual environment. This allows for the story to be told without the restrictions of having to physically enact and stage everything. This process still requires skills and budgets that are outside the reach of the average public. Furthermore, once the 'render' phase is done, everything is typically locked down and all flexibility is lost. The rest of the video system is still the same as it ever was.

In order to transmit digital video, the information in the video is typically compressed in order to fit the available bandwidth. Traditional coding systems work with pixels as the unit of information, and attempt to recreate the source pixels as faithfully as possible. While this represents a simple objective to be aimed for by an encoder, it does limit the flexibility of compression and adaptation. Everyone largely sees the same information, regardless of the personal preferences, playback context and device capabilities. Note that device capabilities can be taken into account in limited ways for example by adapting resolution or quality. These capabilities are still far from the potential of the present invention. The present invention particularly allows to deliver a certain story optimally taking account of different form-factors of the display devices and user preferences. Thereby it is possible for example to show/hide certain more/less important aspects of the story, to adapt details making them more specific or generic, and to select objects, for example actors in the story.

Currently, coding of video has been primarily focused on bandwidth optimization. This is too restrictive for future usage scenarios.

Digital video is typically visualized as it was coded. Pixels are reconstructed, and shown to the end-user via a display. Sometimes minor adaptations are applied, such as changing the aspect ratio to fit the screen, for example by clipping or letterboxing, or by applying some filters to adapt certain content scenarios. The options here are very limited due to the way the content was represented and coded. One can in a conventional video system not choose to semantically adapt the content to personal preferences, optimize framing while taking into account the content and screen real-estate on the viewing device, and so on. The content is shown in a very similar way as it was coded.

The basic idea of the invention is to separate the semantics from the audiovisual information. The semantic information includes information about the objects that are in the scene, how these evolve through time, how they relate to each other, the 'importance' of the objects and actions to the story that is being told, etc. The audiovisual information defines how the abstract concepts from the semantic stream can be transformed into an audiovisual stream that is conveys the 'gist' of the story to the end-user.

The separation of semantics from the audiovisual information enables a much higher level of flexibility to all of the different components of a video system.

The capture stage can now enable people to, on a semantic level, describe the story they wish to tell and to specify the visual properties the certain aspects of this story should have. Traditional capture can still be done, however a semantic extraction step is preferably added to enable post-capture edits to both story and visuals.

The transmission stage is split in two. The semantic stream becomes the main information stream that is transmitted, and is generally a low-bandwidth signal. The audio-visual information is a pick-and-choose type of source, where the decoder can select what audio-visual information it needs in order to instantiate the semantic story. Local caching is furthermore facilitated due to the object-based representation, wherein popular, typically more general audio-visual information can be stored locally while audio-visual information relating to specific object details are not cached.

Once the semantic story has been instantiated, one can render this story taking into account the different restrictions and preferences that are applicable. The user might be watching the content on a small screen, and it could thus be advisable to only render the items that are of higher importance to the story. Or the user might be bandwidth limited, and would thus prefer to re-use compatible audiovisual information that is locally available.

This concept allows for the semantics to regain its central role in story telling rather than the audiovisual representation thereof.

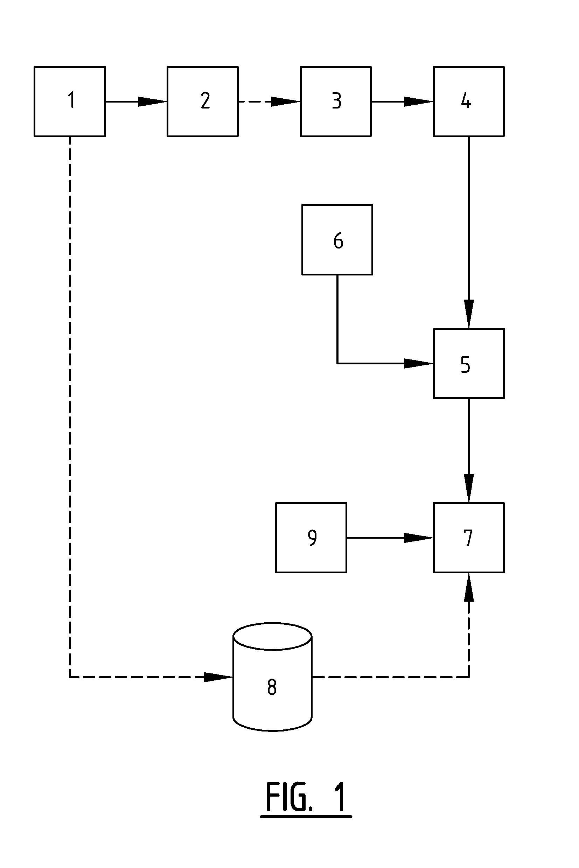

Figure 1 illustrated an embodiment of the invention. The semantic description 1 is the starting point. One can get such a description from a user who describes his/her story in a semantic manner, or use (semi-)automated tools to transform more traditional content. The semantic description includes references to audio-visual information which it expects. The nature of this audio-visual information, along with the type of references to it will be explained at a later stage.

The semantic description 1 is then fed into a semantic encoder 2. This is a lossless encoder 2, in contrast to traditional video encoders. As semantic information can be already quite compact, this 'encoder' could also merely be a packaging operation in order to create packets that can be optimally transmitted.

The decoder 3 receives the semantic information from the encoder 2. After the semantic description has been decoded in step 4, one can perform a semantic transform operation 5 in order to take into account a wide range of preferences and restrictions 6. A lot of the flexibility of the proposed system is exposed by this step 5. A semantic description 4 of the *story* is transformed 5 into an adapted semantic description 7 of the story that can be optimally consumed by the user.

After this adaptation 5 of the semantic description 4 to the personalized semantic description 7, one can initiate the semantics using the audio-visual information store 8. An abstraction has been made in figure 1 about where this store should reside. It is envisioned that portions of this store 8 can reside at many locations; similar to a caching hierarchy in a computer system. Data that is used most / most recently is kept closer to the user. Note that the semantic transform 5 can use this locality information of the available audio-visual information 8 in order to select the information that should be used. In the schematic representation of figure 1, the locality information would be introduced together with the preferences and restrictions 6. As mentioned earlier, in bandwidth constrained scenarios, one might prefer to use information that is closer to the user; at the expense of reconstruction fidelity. Note that the semantic description indicates what is most important to the story, and the user preferences can be taken into account in order to determine what is important to him/her. As such, the reconstruction 'fidelity' suffers, but the story telling / viewing experience does not.

The render step puts the instantiated audio-visual objects together into a representation 9 that can be consumed by the end-user. One can render to traditional video in order to consume it on a TV or a mobile phone for instance, but other representations are off course possible as to enable content viewing on devices such as stereoscopic 3D TVs, light field displays and so on.

An preferred aspect of the invention is the concept of hierarchical modeling. These models can be used to represent a whole range of objects, from very generic ones to very specific one. Take for example a car. A very generic representation of a car could be the traditional "kids drawing" representation of a car, i.e. a box-like representation with 4 wheels. More specific instances could be sedan-shaped cars, break-shaped cars, sports cars, etc., while even more specific instances could model exact car types of the correct year of built including certain user modifications.

The same concept can be expanded to other object classes, such as human beings. When a story defines a person to be included, the semantics can indicate how important the actual instance of this class 'human being' is to the story. For a person in the background for instance, it might not be that important how he/she exactly looks. Rather, the fact that there is a human being there with properties *x* and *y* can already be enough. On the other hand, for a role in which people need to recognize someone (e.g. family movie, a series that needs temporal consistency), it is important to recreate exactly that instance.

Note that this doesn't necessarily mean that specific instances are only defined for important objects in the story. One can still specify the instances in a detailed manner when one wishes; however the coding system or end user can determine what should be accurately recreated, and where the object hierarchy can be exploited to move to more generic instances.

The end-user can claim a more dominant role in the video delivery system. By defining, on a semantic level, what is important to the story and what is less important, one can also include the end-user preferences in order to optimize aspects such as quality and bandwidth. While for a certain viewer it might be important that a certain car is recreated as accurately as possible, for others it might be enough that a car is visualized without any specific properties. This while retaining the important semantics of the story.

By doing so, one can create and/or modify 5 the semantics 4 separately from the audiovisual part. This feature enables anyone to tell a story without requiring dedicated audiovisual skills in order to create a comprehensive story.

In order to make things more practical, the principles of the invention will now be described in a more concrete example. Figure 1 is used a reference. The semantic description 1 will define, on a semantic level, what the objects in the scene are and will define multiple object details for each object, the details being chosen from: how objects relate to each other, what dynamic properties objects have, what actions are objects doing and what the importance of the object or object detail is to the story. The importance to the story is defined by assigning an importance value to each one of the multiple object details.

An object has preferably two classes of details; the *intrinsic* details and the *extrinsic* details. Details of objects can also be named properties. The intrinsic properties define the properties that are 'local' to the object. As such it defines the object or the type of object, and action or the type of action the object is undergoing/doing. The extrinsic properties on the other hand define the way the objects are behaving in the world. Examples of extrinsic properties are: where are objects located, what interactions are occurring, etc. In order to provide a notion of 'importance' to all these aspects, it is preferred according to an example of the invention to define each instance in a hierarchical spectrum that spans from 'generic' to 'specific'. This spectrum, defined by the story, will be used to scale the reconstruction quality of a certain object when needed.

Object type description preferably relates to an identifier to a definition of an object which resides in the audio-visual store.

Object type spectrum is preferably defined by starting with the specific object instance and moving upwards in the object class hierarchy towards the most generic object instance available. Coarse example: Leonardo Di Caprio -> Brown haired male -> male -> human.

In reconstructing an object, the decoder selects how specific an object is to be reconstructed. Depending on the story, end user, device or network this can mean different things. Story-wise, a main actor in a movie will probably have high importance as an object while background actors might only have limited importance so that the information relating to these objects is restricted for example to being male or female. The network will preferably look at the network traffic that is required for instantiating a certain specific model, including knowledge of the local object store at the client if available, and take into account the available network bandwidth at that given moment. The importance from the network for this object will reflect such considerations. The semantic transform 5 will take these different factors 6 into account, the factors comprising at least one of story, network, personal, devices, to generate and assign an importance value that fits best.

Object action description preferably relates to an identifier to an action definition which resides in the audio-visual store. The object action preferably depends on the supported actions of the object type.

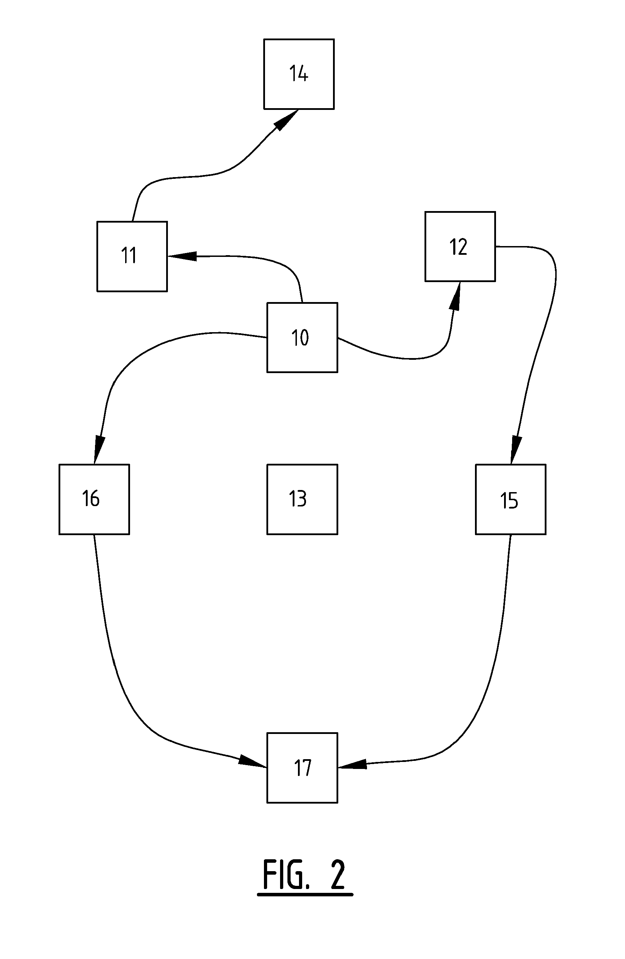

An example of such object action description is: Background actor sitting while drinking coffee & reading -> sitting while reading -> reading. Note that this example already implements a hierarchical list which was mentioned earlier. Figure 2 illustrates a more natural representation of such hierarchical list. In the figure, reference 10 illustrates 'reading & drinking coffee & sitting', reference 11 illustrates 'reading & sitting', reference 12 illustrates 'reading & drinking coffee', reference 13 illustrates 'drinking coffee & sitting', reference 14 illustrates 'reading', reference 15 illustrates 'drinking coffee', reference 16 illustrates 'sitting'. Assuming 3 orthogonal actions (all 3 can occur at the same time), 7 above-mentioned combinations of these actions can occur. Now assume that the action which is defined by the story is 'reading & sitting & drinking coffee'. If it is an object to construct an 'importance spectrum', for example at a specific time instance, one needs to choose a route to move from this target action towards the idle action 17, where no action is applied. Figure 2 shows 3 such plausible routes, and the choice of these routes depends on the metric one preferably optimizes. One differentiates between actions that are important to the story, and others that are less so. If the spectrum is defined as the path 10 - 12-15 - 17 in Figure 2 for instance, this means that the 'drinking coffee' aspect is very important to the story, the reading is less important and the sitting even less. If, on the other hand, path 10 - 11 - 14 - 17 was selected, the reading 14 is the most important and the other actions can be dropped if deemed necessary.

Once a spectrum has been built for a certain time instance the 'hierarchy', one also preferably defines the importance ranges, these ranges being an example of implementation of the importance value, to each of these discrete actions in the spectrum. Assuming the importance metric is defined within [0.0,1.0], one thus distributes this range over the spectrum. E.g. when taking path 10 - 11 - 14 - 17 from figure 1, the spectrum is defined as 'reading & drinking coffee & sitting' ('RDS') -> 'reading & sitting' ('RS') -> 'reading' ('R') -> *idle.* If the fact that the 3 actions done together is very important to the story, the 'RDS' action will be quantified with a large sub-range; e.g. [1.0-0.3]. The rest of the importance range can then be divided to the other actions 'RS' and 'R'; e.g. [0.3-0.15] and [0.15,0]. In other cases where there is less importance put on these actions, it can have other importance values to reflect this.

A range is associated with a sub-action. As such, if the action model supports this, one can vary the detail of reconstruction within such a sub-action as well. In the previous example, if an importance value of 0.9 is given to the 'RDS' action, reconstruction would be more accurate than when an importance value of 0.4 would be given for this same action.

Extrinsic properties are usually raw data that defines where the object should be located and oriented. Alternatives are possible however, e.g. for statistically derived locations / orientations where the absolute location / orientation isn't that important, but the statistics of (multiple) location(s) is important. E.g. a school of fish, raindrops, etc.

In most cases, the importance values are less relevant for extrinsic properties. The amount of data is limited, and as such one usually does not require a scalable representation. For some cases however, it is feasible to create an importance spectrum. If we take the example of the school of fish, one could locate and orient each fish individually. With a large school of fish, this can result in a lot of data. As such, it can be feasible to be able to scale this down. In this case, one could represent the movement and orientation of the complete school as a single entity, and model the individual movement of the fish based on statistics.

In the case of not having a spectrum, instantiation is straightforward. If there is a spectrum, the importance value defines how accurate this location and orientation will be reconstructed.

In a story, objects often interact with each other. These interactions can change the way the objects appear. While such interactions could be modeled as intrinsic properties, it is sometimes more feasible to model them as external modifiers to the object rather than internal ones. When bumping into someone for instance, there are several layers of detail that this interaction exhibits. The stature of the person might temporally become less natural, the muscles are 'dented' during the bump, etc. In such a case, one has the choice of providing all these variations to the person within the object action as intrinsic variations. Obviously one cannot model all possible interactions off course, so it makes sense to separate intrinsic and extrinsic influences in order to make the system tractable. For 3d models, external modifier can be modeled differently than intrinsic features. Rather than modeling them physically accurate, external modifiers typically correspond to more generic changes to the shape or appearance of the model. E.g. a sphere shaped pression field that, in case of a bump, resembles the impact area of the bump. This pression field can be applied to the instrinsic model to create an approximation of the actual impact.

The importance spectrum is similar to those of the object actions as an interaction can have multiple effects. Building a spectrum from the combination of these effects requires a hierarchy, as was mentioned in the object actions part. The action now involves two or more objects however.

When a certain interaction is assigned as being very important to the story, it will be reconstructed faithfully. An interaction in the background might be of less importance however. This is also similar to the object actions part.

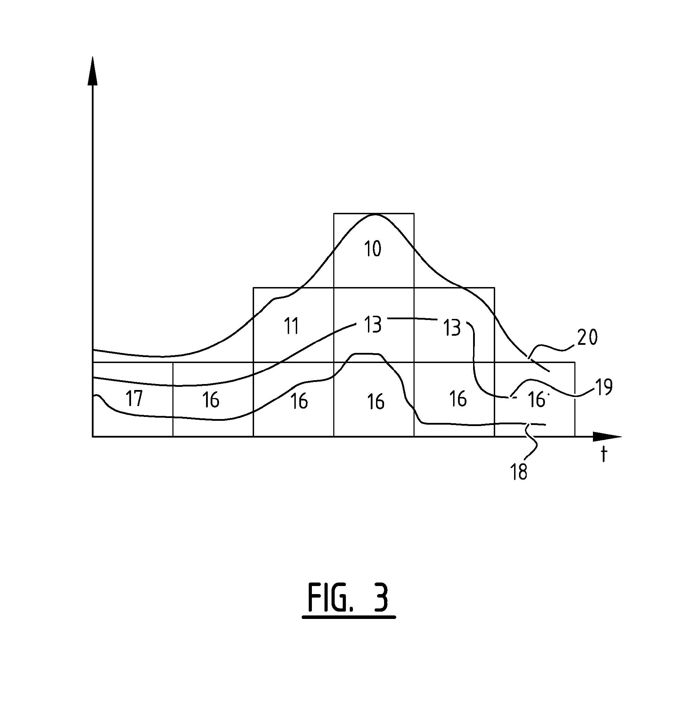

An example of instantiation over time for an action of the object type 'human' is illustrated in figure 3. Figure 3 illustrates on the horizontal axis the time and on the vertical axis the action hierarchy. The line 18, line 19 and line 20 indicate so-called 'iso-importance' lines; these are the lines connecting point with equal importance values throughout time. Note that, for sake of clarity, only 1 measurement per action is taken. In reality, the importance can vary throughout the action as well. Next to these iso-importance lines, there is also an indication of the hierarchical aspect. First of all the coarse linearization is shown by looking at the columns. The most specific action is shown towards the top while the more generic actions are shown at the bottom. Take for example the third column, showing that the most specific action is 'reading & sitting' 11, while the more generic action is 'sitting' 16. When distributing importance values to these actions, it was for example chosen (by the story) that [1.0,0.6] would be assigned to the 'RS' 11 sub-action, while [0.6,0.0] would be assigned to the 'S' 16 sub-action. Furthermore the lowest value for the 'RS' 11 sub-action (0.6) does not map to the lowest reconstruction quality of this action as the 0.6 dot is not located at the top of the sub-action box. This means that, rather than lowering reconstruction quality to the extreme for this sub-action, the story opts for jumping to a better reconstruction quality of a less specific sub-action; in this case the 'S' 16 sub-action. This gives freedom to the story to determine how important a certain action is versus the reconstruction quality for this same action. Furthermore it is noted that the distribution of the importance values is not necessarily linear within a sub-action.

For instantiating an action, every component in the system is assigned with an importance value, preferably over the action spectrum. In the end all scoring values are aggregated, and a certain instantiation is selected.

The story defines the objects as well as the hierarchy of the objects with its multiple object details. Thereby, the story in the example of figure 3 also defines the hierarchy of the action details. In this case it switches from a 'reading & sitting' action 11 to a 'sitting' 16 action for an importance measure of 0.6. Within the 'RS' 11 sub-action, the distribution of the importance metric is hierarchic. The scoring values can be linear but should not be linear and can be depending on the story, the network, the user experience, the decoder capacity and further parameters. Taking these scores into account may lead to a scoring value having a complex function, based on which an optimum is calculated.

The network is preferably adapted to also influence the selection of the decoder. In other words, the network also provides scoring over the importance spectrum. In this example, we make the assumption that the 'S' 16 sub-action is already available at the decoder, for example it had been used before or was delivered beforehand, and thus this only requires marginal bandwidth to instantiate this. As such, the score for this action is high, regardless of the reconstruction quality of this sub-action. The 'RS' 11 sub-action on the other hand is not fully available yet at the decoder, and this thus requires a certain bandwidth to instantiate this sub-action at a certain quality level. Delivering the lowest quality of the 'RS' 11 sub-action is still OK from the network point-of-view, however delivering the higher quality sub-action does impose some constraints. As such, the score goes down with a higher reconstruction quality in this case.

The user, in the present example, is only worried with the reconstruction quality of the action. As such, if permitted by story, if the object is either sitting, or reading & sitting, it doesn't matter much for this user. He/she is more sensitive to the quality of the action rather than the action itself. Note that this is not always the case. If the user has an affinity with a certain action, he/she might value this action more even if it means that the reconstruction quality is lower in comparison with another sub-action which has higher reconstruction quality.

The limiting factor for the decoder in this example is the complexity of decoding and reconstructing the scene. The decoder might be a mobile device for example with limited computational capacity. The complexity of reconstructing the relevant (sub-)actions is therefore scored. Lower quality reconstruction reaps lower complexity in this case, and reconstructing the 'S' 16 sub-action scores higher than the 'RS' 11 sub-action.

When all relevant object details have been assigned an importance value according to the importance spectrum, the scores are aggregated. This is done in the 'semantic transform' block 5 of figure 1. Various aggregation functions are possible; in this case a simple weighted linear combination is used in order to specify the aggregated result. Based on these importance values, the decoder selects the instance with the highest score; in the example this is the instance that corresponds to the importance value 0.67; an instance of the 'RS' 11 sub-action.

The described system allows for a semantic description to become a pivotal part of a video transmission. The description enables a flexible way of creating, transforming and delivering content. By postponing the instantiation (close to) the client, one increases scalability and facilitates video-stream independence from end-user devices.

This invention enables rigorous adaptation of the codec based on context properties at the consumer side. The context is estimated, along with the impact of these context changes, and this is used to drive the codec properties in order to optimize the viewing experience, the bandwidth and/or the complexity.

The invention allows for many embodiments that were previously not possible. Adaptation according to light conditions, attention span, gaze, saliency, etc. is possible through this system. This in turn allows for the system to adapt to the user, rather than the user having to adapt to the system, thus providing an important advance in the way video data is consumed.

Existing solutions do not automatically adapt the codec parameters according to the viewer's context. This solution does offer such automated codec adaptation, enabling a multitude of usage scenarios which can optimize the video delivery system, be it for user experience, bandwidth use or complexity.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the FIGs., including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. Video encoder comprising a story database wherein objects forming part of a story of the video are stored, and wherein for each of the stored objects multiple object details are provided, the video encoder further comprising an audio-visual database comprising audio-visual information for each one of the multiple object details provided in the story database, and wherein an importance value is assigned to each one of the multiple object details.

2. Video encoder according to claim 1, wherein the multiple object details comprise a substantially hierarchical list of object details converging from generic object information to specific object information.

3. Video encoder according to claim 2, wherein the audio-visual database is provided in a corresponding hierarchical order and in such a manner that generic audio-visual object information is usable as audio-visual output and is combinable with specific audio-visual object information to arrive at audio-visual output reflecting the specific object information.

4. Video encoder according to any one of the previous claims, wherein the multiple object details comprise one or multiple hierarchical lists of object interactions converging from generic interaction information to specific interaction information and wherein the lists are reflected by the respective importance values.

5. Video encoder according to claim 4, wherein the audio-visual database comprises hierarchical audio-visual information corresponding to the one or multiple hierarchical lists of object interactions, wherein generic audio-visual interaction information is usable as such as audio-visual output and is combinable with specific audio-visual interaction information relating to specific interaction information to arrive at audio-visual output representing the specific interaction information.

6. Video encoder according to any one of the previous claims, wherein the objects are stored by storing semantic information relating to the multiple object details of the objects in a database.

7. Video decoder adapted to communicate with a video encoder according to any one of the previous claims, wherein the video decoder comprises a communication module adapted to receive a story comprising objects with multiple object details from the video encoder, and wherein the video decoder comprises a selector adapted to make a selection of said multiple object details, wherein the communication module is further adapted to request and receive audio-visual information from said video encoder representing said selection, wherein the video decoder further comprises an audio-video generator to generate an audio-visual output based on said received audio-visual information.

8. Video decoder according to claim 7, wherein the selector comprises a user preferences database and wherein the selector is adapted to make the selection based on the user preferences database.

9. Video decoder according to claim 7 or 8, wherein the selector is adapted to make said selection based on at least one of video decoder constraints, display constraints, communication constraints.

10. Video system comprising a video encoder according to one of the claims 1-6 and comprising a video decoder according to one of the claims 9.

11. Method for encoding video, the method comprising:
- generating a story database wherein objects forming part of a story of the video are stored, and wherein for each of the stored objects multiple object details are provided;
- generating an audio-visual database comprising audio-visual information for each one of the multiple object details provided in the story database;
- assigning an importance value to each one of the multiple object details.

12. Method for decoding video, the method comprising:
- communicating with a video encoder according to any one of the previous claims 1-6;
- receiving a story comprising objects with multiple object details from the video encoder;
- selecting a selection of said multiple object details;
- requesting and receiving audio-visual information from said video encoder representing said selection;
- generating an audio-visual output based on said received audio-visual information.

13. A computer readable storage medium comprising instructions, which, when executed cause a data processing apparatus to carry out the steps of the method of any one of the claims 11 and 12.
